# EUROPEAN PATENT APPLICATION

(11) **EP 4 571 626 A1**
(43) Date of publication of application: **18.06.2025**
(21) Application number: 24219159.1
(22) Date of filing: 11.12.2024
(51) Int. Cl.: G06Q 30/0601

(54) **GENERATIVE ARTIFICIAL INTELLIGENCE KNOWLEDGE GRAPH IN AN ITEM LISTING SYSTEM**

(30) Priority: 13.12.2023 US 202318539091
(71) Applicant: eBay Inc., San Jose, CA 95125 (US)
(72) Inventor: WANG, Menghan, SAN JOSE (US); LI, Mengyi, SAN JOSE (US); TALLEY, Jeffrey William, SAN JOSE (US); ZHANG, Duanfeng, SAN JOSE (US); LI, Sishu, SAN JOSE (US); ZHANG, Xiang, SAN JOSE (US); ZHOU, Danny, SAN JOSE (US); JIN, Jianian, SAN JOSE (US); SARAN, Sarvesh, SAN JOSE (US); GUO, Yuchen, SAN JOSE (US); ZHOU, Xun, SAN JOSE (US)
(74) Representative: Müller-Boré & Partner Patentanwälte PartG mbB

(57) **Abstract**

Methods, systems, and computer storage media for providing a knowledge graph using a generative AI knowledge graph (KG) engine "generative AI KG engine" in an item listing system. The generative AI KG engine supports generating the knowledge graph using a generative AI model (e.g., an LLM). In operation, a seed product is accessed in a product listing system. Using a product knowledge graph, a plurality of candidate products associated with the seed product are identified. The product knowledge graph comprises a plurality of products as nodes and a plurality of relationships as edges. The product knowledge graph is associated with a generative AI model. Using a ranker of the product listing system, a plurality of recommended products are identified. The plurality of recommended products are a subset of the plurality of candidate products. The plurality of recommended products are communicated and caused to be generated on a graphical user interface.

## Description

### BACKGROUND

Users can interact with generative artificial intelligence technologies in different types of applications and services to accomplish computing tasks. Generative AI refers to a class of AI systems and algorithms that are designed to generate new data or content that is similar to, or in some cases, entirely different from data they are trained on. Generative AI systems can create support text generation, image generation, music and audio generation, video generation and data synthesis. In particular, generative AI systems can support an item listing system in several ways to improve operational efficiency, customer engagement, and online shopping. For example, an item listing system may employ a generative AI system for content generation (e.g., product descriptions), personalized shopping experiences (e.g., recommendation engines), product discovery (e.g., visual search), and virtual assistants (e.g., chat bots). The item listing system can leverage generative AI through Application Programming Interfaces (APIs), pre-trained models, and custom AI solutions to enhance item listing functionality.

### SUMMARY

Various aspects of the technology described herein are generally directed to systems, methods, and computer storage media for, among other things, providing a knowledge graph using an artificial intelligence system associated with an item listing system. A generative AI knowledge graph engine "generative AI KG engine" of the artificial intelligence system supports providing a knowledge graph in the item listing system. The generative AI KG engine supports generating the knowledge graph (e.g., a product knowledge graph or generative AI KG) using a generative AI model (e.g., a large language model). In particular, the generative AI knowledge graph (KG) engine includes an edge-node prediction service - where nodes and edges of the knowledge graph are generated based on product knowledge graph generation data (e.g., one or more prompts executed on the generative AI model). The generative AI KG engine further includes a mapping service that maps products (having KG information) to products in a product listing database (e.g., an item listing database) of the item listing system. The product knowledge graph or mapped product knowledge graph can be deployed to support different types of services (e.g., recommendation, product search, seller feedback service) in the item listing system.

In operation, a product listing system having a seed product is provided. The seed product is accessed. Using a product knowledge graph, a plurality of candidate products associated with the seed product are identified. The product knowledge graph comprises a plurality of products as nodes and a plurality of relationships as edges. The product knowledge graph is associated with a generative AI model. A plurality of recommended products are identified. The plurality of recommended products may be identified using a ranker of the product listing system. The plurality of recommended products are a subset of the plurality of candidate products. The plurality of recommended products are communicated and caused to be generated on a graphical user interface.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A and 1B are block diagrams of an artificial intelligence system for providing product knowledge graph functionality in an item listing system, in accordance with aspects of the technology described herein;
FIG. 1C - 1F are schematics and interfaces associated with providing product knowledge graph functionality in an item listing system, in accordance with aspects of the technology described herein;
FIG. 2A is a block diagram of an artificial intelligence system for providing product knowledge graph functionality in an item listing system, in accordance with aspects of the technology described herein;
FIG. 2B is a block diagram of an artificial intelligence system for providing product knowledge graph functionality in an item listing system, in accordance with aspects of the technology described herein;
FIG. 3 provides a first exemplary method of providing product knowledge graph functionality in an item listing system, in accordance with aspects of the technology described herein;
FIG. 4 provides a second exemplary method providing product knowledge graph functionality in an item listing system, in accordance with aspects of the technology described herein;
FIG. 5 provides a third exemplary method of providing product knowledge graph functionality in an item listing system, in accordance with aspects of the technology described herein;
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION OF THE INVENTION

### Overview

An item listing system and platform support storing items (products or assets) in item databases and providing a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California. An item listing system may also provide generative-AI-supported applications ("generative AI applications") that leverage generative AI models (e.g., image generation models and Large Language Models - "LLM") to create, generate, or produce content, data or outputs. LLMs are a specific class of generative AI models that are primarily focused on generating human-like text. Generative AI models, like GPT (Generative-Pre-trained Transformer) and its variants, are designed to generate human-like text or other types of data based on the input they receive (e.g., via a prompt interface). These applications use generative AI to perform various tasks across different domains to provide improvement in automation, efficiency, and human-like interaction.

Conventionally, item listing systems are not configured with a comprehensive logic and infrastructure to effectively provide generative-AI-based product knowledge graphs for an item listing system. Conventional item listing systems have limited understanding of products and do not include data structures with a comprehensive understanding of products. Moreover, existing data structures are not easily integrated into different types of generative AI-supported functionality (e.g., search, recommendation, product lookups) of the item listing system. An item listing system may rely on manual labeling of products, where product relations are annotated by human experts. The manual approach to understanding product relationships can be time-consuming and labor-intensive. Moreover, it could also limit the capacity to identify and leverage a comprehensive set of product relationships for promotional strategies or other functionality (e.g., search or seller feedback) in an item listing system.

Merely implementing a conventional knowledge graph - without a generative AI knowledge graph (KG) engine - causes deficient functioning of an item listing system. For example, a traditional knowledge graph can be associated with a range of challenges from data completeness and accuracy to limited contextual information. In particular, knowledge graphs rely on accurate and complete data; if the underlying product data is incomplete, outdated, or inaccurate, it can lead to incomplete or incorrect knowledge graph representations. Knowledge graphs may lack the ability to capture nuanced contextual information about products, such as user preferences, real-time popularity, or temporal changes in product features. Knowledge graphs may struggle with the "cold start" problem, where new products or categories lack sufficient historical data. This can make it challenging to provide accurate recommendations for recently introduced items.

Conventional item listing systems can be improved by addressing these limitations based on leveraging advanced machine learning models and techniques - that can enhance the flexibility and adaptability of product knowledge graphs in capturing complex relationships and evolving user preferences. As such, a more comprehensive item listing system - with an alternative basis for performing generative AI knowledge graph (KG) engine operations - can improve computing operations and interfaces for providing item listing services in an item listing system.

Embodiments of the present invention are directed to systems, methods, and computer storage media for, among other things, providing a knowledge graph using artificial intelligence system associated with an item listing system. A generative AI knowledge graph engine "generative AI KG engine" of the artificial intelligence system supports providing a knowledge graph in the item listing system. The generative AI KG engine supports generating the knowledge graph (e.g., a product knowledge graph or generative AI KG) using a generative AI model (e.g., a large language model). In particular, the generative AI knowledge graph (KG) engine includes an edge-node prediction service - where nodes and edges of the knowledge graph are generated based on product knowledge graph generation data (e.g., one or more prompts executed on the generative AI model).

The generative AI KG engine further includes a mapping service that maps products (having KG information) to products in a product listing database (e.g., an item listing database) of the item listing service. The product knowledge graph or mapped product knowledge graph can be deployed to support different types of services (e.g., recommendation, product search, seller feedback service) in the item listing system.

The Generative AI KG is provided using the generative AI KG engine that is operationally integrated into the item listing system associated with an artificial intelligence system. The artificial intelligence system supports a generative AI KG framework of computing components associated with generative AI KG engine operations for providing the generative AI KG.

At a high level, understanding the relationship between products is important in item listing systems or product listing systems. In particular, offering affordable alternative products or supplementary products to customers can be based on knowledge of the relationship between products. For example, a customer who may hesitate to purchase a high-priced product may receive a recommendation for a moderately-priced alternative product and decide to purchase the alternative product. Moreover, another customer may receive a recommendation for a supplementary product, after their purchase of a related product. However, capturing product relationships can be a challenging task.

By way of illustration, existing recommendation systems in an item listing system may focus on behavior data; however, with generative AI models (e.g., LLMs) a broader amount of data is accessible for improving recommendations systems and other types of functionality of an item listing system. LLMs can store knowledge from different domains and fields that further complement the previously limited behavior data relied upon by recommendation systems. For example, an LLM-based system like ChatGPT may recommend buying turkey on Thanksgiving day, in a zero-shot manner (i.e., without having an prior information or historical data and user preferences or interactions), even without having click behavior data related to turkeys or Thanksgiving. Nonetheless, item listing systems have not adequately integrated LLMs into functionality (e.g., applications and services) of the item listing system in the most effective and efficient ways. In particular, latency and cost have been considerations that have limited the integration of LLMs into item listing systems.

A generative AI knowledge graph framework is a technical solution directed to providing a knowledge graph using a generative AI engine of an item listing system. The generative AI knowledge graph framework includes a generative AI KG engine that supports generating a knowledge graph (e.g., a product knowledge graph or generative AI KG) using a generative AI model (e.g., a large language model - "LLM"). By way of example, LLMs can provide natural language processing (NLP) based on pre-trained models that encode an extensive amount of information. The LLM can be leveraged to understand content or items (e.g., products) of an item listing platform to generate an improved representation of relationships between items. In particular, the LLM can be applied to a multitude of downstream NLP applications.

The LLM can be associated with seed input prompts (e.g., product knowledge graph generation data) - that are knowledge graph generation prompts - that support determining relationships between products (e.g., a first product and a second product; or a primary product and a complementary product). Based on executing seed input prompts on the LLM, the LLM results can be employed to generate a product knowledge graph. The product knowledge graph improves on the latency issues and cost associated with other integration approaches of LLMs in an item listing system. The product knowledge graph can be deployed and integrated (e.g., via an Application Programming Interface) into different types of software (e.g., applications and services - collectively "applications") in the item listing system.

In operation, an item listing system (e.g., product listing system) can implement an artificial intelligence system that provides a generative artificial intelligence knowledge graph engine. The generative AI KG engine operates as an edge-node prediction service using the generative AI model to generate a knowledge graph. The generative AI KG engine operates with an item listing system client (e.g., product listing system client) to provide functionality of the item listing system based on a knowledge graph (e.g., generative AI knowledge graph or product knowledge graph).

The knowledge graph is generated using a machine learning engine, a generative AI model, and product knowledge graph generation data. The product knowledge generation data can include data associated with products in the item listing system, where the product knowledge graph generation data includes seed prompt inputs - based on prompt templates - that support generating the product knowledge graph. The generative AI model can be an LLM (e.g., a Generative Pre-Trained Transformer model) that is employed to generate the product knowledge graph. The generative AI model can specifically be trained using knowledge graph generation training operations and the product knowledge graph generation data that support generating the product knowledge graph.

The product knowledge graph can be converted into a mapped product knowledge graph using mapping rules and mapping operations (e.g., knowledge graph mapping operations) that support mapping products to products in the item listing system. The mapping rules can support mapping products to identical products in the item listing system or to similar products in the product listing system. The item listing system (e.g., a database of items in the item listing system or a product listing system database) can include multiple instances of the same product, as such, the product can be specifically be mapped to specific instances of the product in the item listing system based on features of the node associated with the product in the product knowledge graph and features of an instance of a product on the product listing system.

The product knowledge graph (or mapped product knowledge graph) can be integrated into item listing system services that employ the product knowledge graph to perform item listing system functionality. For example, an item listing system service can be a search engine or a recommendation service that employs the product knowledge graph to provide search result products or recommendation products. The item listing system service, for example, can use a ranker of the item listing system to rank one or more products identified using the product knowledge graph and the item listing system database to identify a subset of products that are communicated as search result products or recommendation products. The product knowledge graph can be used to identify products that are displayed on different types of interfaces (e.g., seller interface, buyer interface, or recommendation interfaces) associated with the item listing system.

Advantageously, the embodiments of the present technical solution support providing a knowledge graph using a generative AI KG engine in an item listing system. The generative AI KG engine supports generating the knowledge graph (e.g., a product knowledge graph or generative AI KG) using a generative AI model (e.g., a large language model). The generative AI KG engine operations provide a solution to problems (e.g., limited capacity for identifying and leveraging a comprehensive set of product relationships for item listing system services and functionality) in an item listing system. The generative AI KG engine components, infrastructure, and ordered combination of steps are an improvement over conventional item listing systems that lack support for a generative AI knowledge graph.

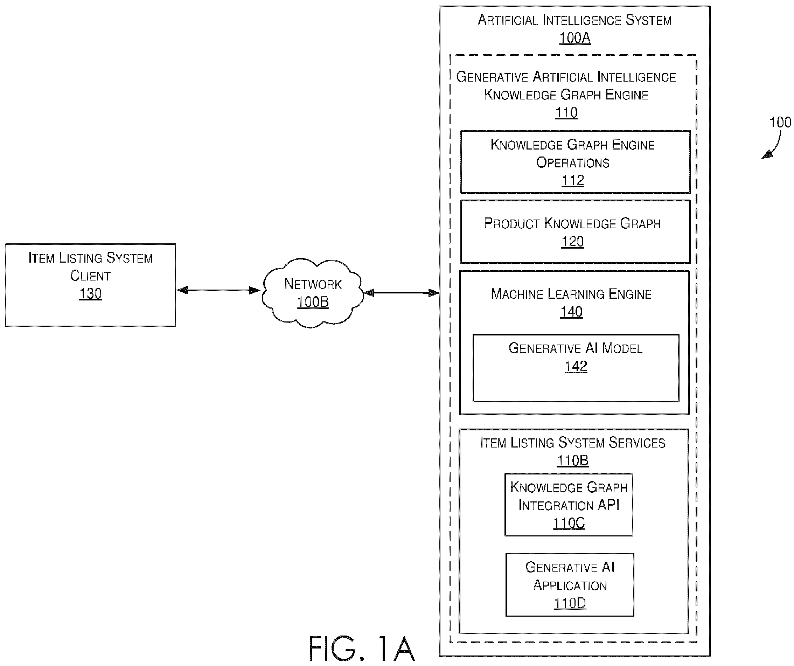

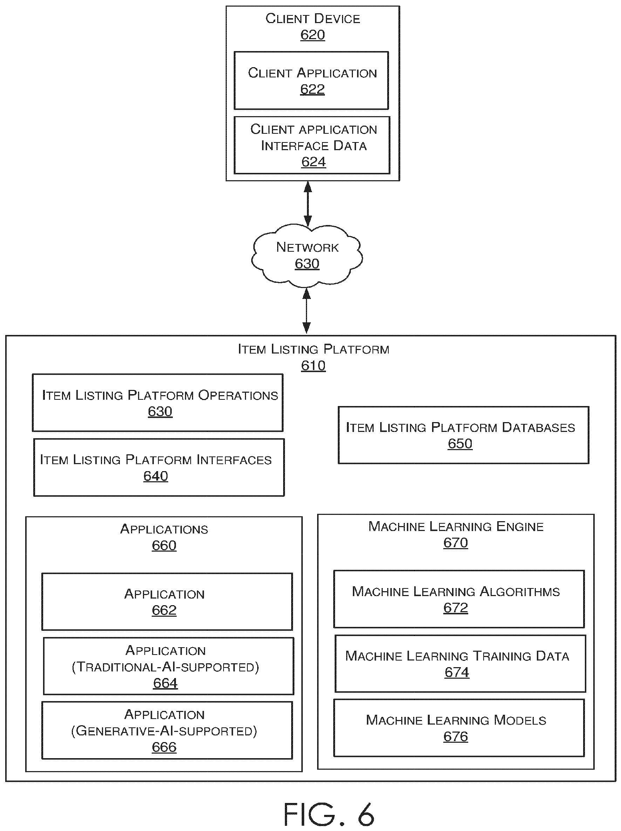

Aspects of the technical solution can be described by way of examples and with reference to FIGS. 1A - 1F. FIG. 1A illustrates an item listing system 100 that includes artificial intelligence system 100A, network 100B, generative artificial intelligence (AI) knowledge graph engine 110, item listing system services 110B, knowledge graph integration API 110C, generative AI application 110D, item listing system client 130, machine learning engine 140 including generative AI model 142. The item listing system 100 (or product listing system) corresponds to item listing system 600 described below with reference to FIG. 6.

The item listing system 100 provides a system (e.g., artificial intelligence "AI" system 100A) that includes an engine (e.g., generative AI KG engine 110) for performing operations (e.g., knowledge graph engine operations) discussed herein. The generative AI KG engine 110 can operate with the item listing system client 130 (e.g., a client device or generative AI application client) that can access the item listing system 100 to execute tasks using a generative AI application 110D associated with a corresponding generative AI model 142. For example, a user - via the item listing system client 130 (e.g., a prompt interface) - can communicate a request (e.g., a generative AI request having prompt data) to the generative AI application 110D and the generative AI model 142 - associated with the machine learning engine 140 - to process the request. Based on the communicating the request, the generative AI KG engine 110 can execute knowledge graph engine operations (e.g. training, generating, deploying, integrating, mapping, predicting, and controlling operations) with components of the generative AI KG engine 110 - to ensure processing the request.

The generative AI KG engine 110 can further include item listing system services 110B that correspond to different services of the item listing system 100. The item listing system services 110B can include search services and recommendation services, for example, that employ the product knowledge graph 120 to provide item listing system functionality. Item listing system services 110B can include a product listing system service and ranker associated with the item listing system 100. Knowledge graph integration Application Programming Interface (API) 110C can be provided to integrate the item listing system services 110B with the product knowledge graph 120. Generative AI application 110D may also operate to employ the product knowledge graph 120 to provide functionality associated with the generative AI application. Other variations and combinations of item listing system services are contemplated with embodiments described herein.

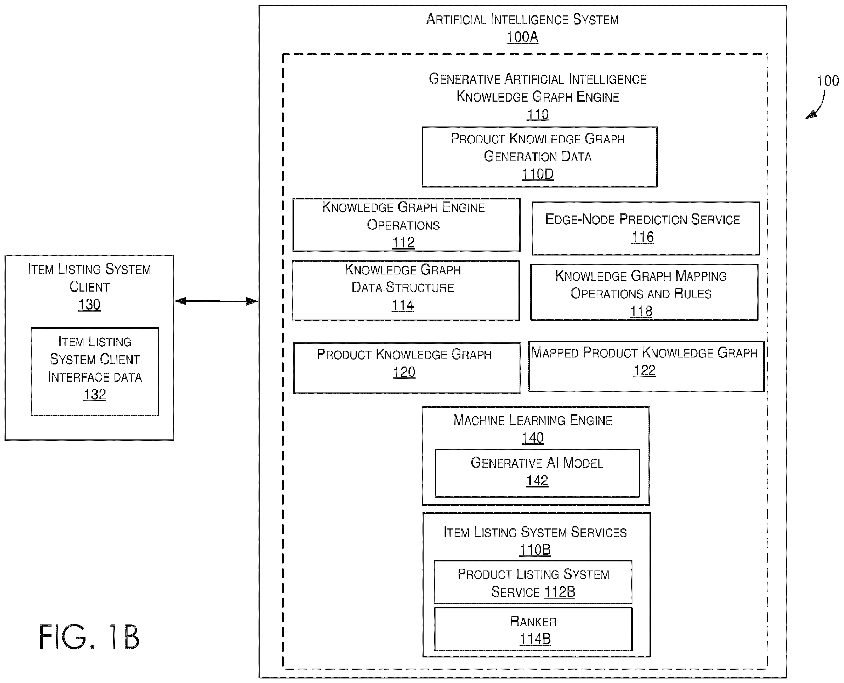

With reference to FIG. 1B, FIG. 1B illustrates item listing system 100, artificial intelligence system 100A, generative AI KG engine 110, product knowledge graph generation data 110D, knowledge graph engine operations 112, knowledge graph data structure 114, edge-node prediction service 116, knowledge graph mapping operations and rules 118, product knowledge graph 120, mapped product knowledge graph 122, item listing system client 130 including item listing system client interface data 132, machine learning engine 140 including generative AI model 142, item listing system services 110B including product listing system service 112B, ranker 114B, and knowledge graph integration API 110C.

The generative AI KG engine 110 and the item listing system client 130 provide graphical user interfaces (e.g., item listing system interfaces and generative AI application interfaces) and operations (i.e., knowledge graph engine operations). The generative AI KG engine 110 and the item listing system client 130 can operate in a server-client relationship to provide product knowledge graph (e.g., product knowledge graph 120 and mapped product knowledge graph 122) functionality. For example, a user can communicate a request from the item listing system client 130 to execute a task via generative AI application and product knowledge graph 120 or mapped product knowledge graph 122. Based on the request, the generative AI KG engine 110 can perform knowledge graph engine operations 112 to ensure processing of the request in the artificial intelligence system 100A.

The generative AI KG engine 110 may execute knowledge graph engine operations 110A to provide functionality associated with generating, deploying, integrating, and using the product knowledge graph 120. The knowledge graph engine operations 112 can support prompt engineering. In particular, generative AI KG engine 110 can include instructions for prompt design for the generative AI model 142, so that the prompts are constructed to provide responses from the generative AI model 142 to the product knowledge graph 120. The generative AI KG engine 110 can design and provide precise language, context cues, tasks specification, and examples and demonstrations in prompt template. Additional functionality can be associated with fine-tuning and iteration to handle ambiguity, model bias, and balancing openness and control of the generative A1 model 142.

Product knowledge graph generation data 110D can include prompt templates that are used to generate prompts that are executed on the generative AI model 142. Product knowledge graph generation data 110D can be processed using prompt engineering operations associated with the knowledge graph engine operations 112. In particular, the prompt engineering can support generate the templates that can be converted into prompts based on different types of data from the product knowledge graph data 110D. The template can include a template format that can be populated with information from the product knowledge graph data 110D. For example, the template can include context that is populated based on title of seed products, historical user behavior, and interface user responses. The prompts generated using the prompt knowledge graph generation data 110D can be executed in batch mode on the generative AI model, to streamline execution of a plurality of prompts associated with generating the product knowledge graph. The prompt template can include one or more features disclosed below Table 1.

**Table 1 - Prompt Template Features**

| | |
|---|---|
| Task/Context Introduction] | Introduce the task or provide context to guide the language model. |
| [Background Information] | Include any relevant background information or key details necessary for the language model to understand the context of the prompt. |
| [Prompt Instruction] | Clearly specify the task or information you are seeking from the language model. Use explicit language and provide any specific requirements for the response. |
| [Example Demonstrations] | Offer one or more examples that demonstrate the expected format or style of the desired output. This helps guide the model in generating responses that align with your expectations. |
| [Contextual Cues] | Incorporate contextual cues or information that can assist the language model in understanding the prompt more effectively. This may include relevant keywords, phrases, or details. |
| [Ambiguity Handling] | Anticipate potential ambiguities in the prompt and provide additional context or clarifications to avoid misinterpretations by the language model. |
| [Balancing Openness and Control] | Specify the level of openness desired in the response. For creative tasks, you may encourage imaginative responses, but for specific tasks, you may need to maintain control to ensure accuracy. |
| [Closing] | Conclude the prompt with any closing remarks or additional instructions as needed. |

Two example templates are shown below.

| | |
|---|---|
| Similar_KG_Prompt (seed_item, example) | Input: One customer recently show interest in \'{seed_item}'\, hereinafter we refer to it as the seed item. |
| | Output: |
| | Task = "Behave as an e-commerce expert of sports good. The goal is to find similar items of a given seed item and encourage a purchase. First infer the probable audience demographics of the seed. The give 5 recommendations that the audiences could be interested in based on the see item. Nodes should be products extracted from the seed item and recommendations. The edges should (Subject, Predicate, Object) triplets. The "Subject" should be a product extracted from the seed item, and the "Object" should be a product extracted from recommended items. The predicates should check that the output meets the format requirements." |
| | Input: One customer recently show interest in \"Adidas Harden Vol. 5\", hereinafter we refer to it as the seed item. |
| | Prompt = task + example + input |
| | Print (prompt) |
| | Return prompt |
| Discovery_KG_Prompt (seed_item, example) | Input: What is the audience demographics of \' {seed_item}'\. For each audience group, list 2 products that are popular among the group of user and related output. |
| | Output: |
| | Task = "Behave as an e-commerce expert. The goal is to find target audience of a given seed item and list 2 products that are popular among the group of users. First infer the probable audience demographics of the seed item. Then give 5 recommendation that the audiences could be interested in based on the seed item. For each recommendation, list the reason and the potential audience demographics. Then format the answers to a knowledge graph using JSON format. Nodes should be products extracted from the seed item and recommendations. The edges should (Subject, Predicate, Object) triplets. The "Subject" should be a product extracted from the seed item, and the "Object" should be a product extracted from recommended items. The predicates should check the output meets the format requirement. |
| | Input: what is the audience demographics of NIKE AIR FORCE". For each audience group, list 2 products that are popular among the group of user and related output. |
| | Prompt = task + example + input |
| | Return prompt. |

The product knowledge graph 120 can be generated based on executing the prompts on the generative AI model 142. The product knowledge graph 120 can be a structured representation of knowledge that captures relationships between entities (i.e., products in a product listing system). It consists of nodes and edges, where nodes represent entities, and edges represent relationships between those entities. Nodes are the entities in the knowledge graph. Each node has properties or attributes associated with it, providing additional information about the entity. An example product node can be associated with: product title - Nike Air Force 1; product type - Athletic shoes; product brand - Nike; product audience - sneaker enthusiasts, sports enthusiasts, fashion-conscious individuals, and young adults (15-35).

Edges represent relationships between nodes in the knowledge graph. These relationships define how different entities are connected or associated with each other. Edges have labels that describe the nature of the relationship. An example edge can be associated with edge subject "NIKE AIR FORCE 1; edge predicate - fashion-conscious individuals' choice; and edge object: NIKE HERITAGE BACKPACK. The generative AI model outputs can processed for mapping the product knowledge graph to an item listing database (e.g., inventory of the item listing system). The outputs can be processed with mapping operations and mapping rules.

The knowledge graph mapping operations and rules 118 can be implemented to convert a product knowledge graph into a mapped product knowledge graph 122. In particular, the products in the product knowledge graph 120 are mapped to corresponding products (e.g., exact match or partial match) products in the product listing database. Exact matching and partial matching can be based on mapping rules. Mapping rules can include matching rules that are employed to identify and exactly map and partially map closely related products between the product knowledge graph and the product listing system database. These rules encompass category matching, where products within the same or similar categories are considered related; brand matching, associating products from the same brand; attribute matching, focusing on products with similar specifications or features; price range matching, recommending products within a comparable price range; and usage context matching, suggesting products commonly used together.

Additionally, historical purchase matching leverages user behavior, while customer preferences matching aligns recommendations with individual user preferences. Seasonal matching offers relevant suggestions based on the current season or upcoming events, while accessory matching suggests complementary items. Popularity matching considers trending or frequently purchased products, and geographic matching tailors recommendations based on regional relevance.

In one embodiment, machine learning models may be trained to predict product relationships based on historical data. For instance, a collaborative filtering model might learn from past user behaviors to predict which products are likely to be related. The matching rules, as described earlier (category matching, brand matching, etc.), are implemented in the form of logical conditions within the algorithm. These rules guide the system in identifying closely related products. An algorithm assigns scores or ranks to potential matches based on how well they satisfy the matching rules. For example, products from the same category might receive a higher score. Other variations and combinations of rules are mapping rules, matching rules, and implementation methods are contemplated with embodiment described herein.

Item listing system services 110B can include different types of services (e.g., a product recommendation application, a product look-up application, and a seller feedback service) that a provided by the item listing system. For example, a product listing system service 112 can be associated with seller to support listing product for sale. A ranker 114B supports ranking functions as a complex system within the item listing system to orchestrate the presentation of products to users based on a multifaceted scoring mechanism. For example, employing a relevance score for each product, the ranker amalgamates factors such as user engagement metrics, historical behavior patterns, and product attributes to dynamically ascertain the most fitting items for individual users.

Leveraging advanced machine learning models, including but not limited to collaborative filtering and content-based filtering, the ranker predicts user preferences and generates personalized recommendations. User behavior analysis incorporates a spectrum of interactions, encompassing clicks, purchases, and temporal dynamics, contributing to the system's adaptability over time. Furthermore, the ranker integrates semantic understanding and contextual information, including location, device type, and real-time user behavior, to tailor recommendations with a high degree of personalization. The item listing system services can be integrated with the product knowledge graph to support corresponding functionality of the item listing system services.

Item listing system client 130 can be associated with seller interfaces, buyer interfaces, and other item listing system service interfaces associated with the item listing system. The item listing system client 130 can cause display of item listing system client interface data 132 that is associated with products (e.g. search result products or recommended products) associated with the item listing system 100 based on the generative AI KG engine 110, the generative AI model 142, product knowledge graph 120, and functionality associated with the item listing system 100. The item listing system client interface data can be associated with different output corresponding to the item listing system services 110B and other functional components and outputs of the generative AI KG engine 110D.

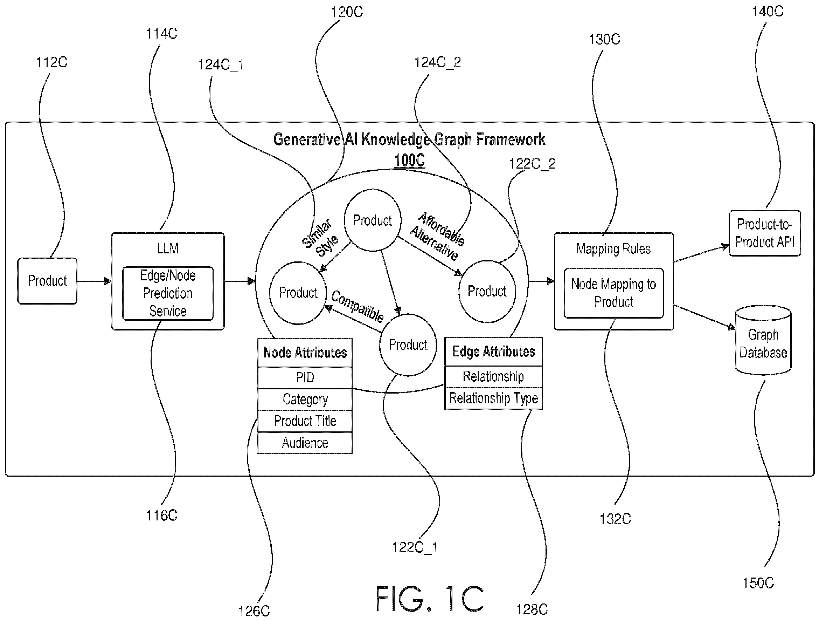

Turning to FIG. 1C, FIG. 1C illustrates a schematic associated with providing a knowledge graph using a generative AI KG engine in accordance with embodiments described herein. FIG. 1C includes generative AI knowledge graph framework including product 112C, LLM 114C having edge-node prediction service 116C, product knowledge graph 120C, product 122C, edge 124C_1, edge 124C_2, node attributes 126C, edge attributes 128C, mapping rules 130C include node mapping to product 132C, product-to-product API 140C, and graph database 150C.

By way of illustration, product 112C (e.g., a seed product) can be processed via a generative AI model (e.g., LLM 114C) that provide edge-node prediction service 116C functionality. The product 112C can be provided as product knowledge graph generation data in a prompt template that is designed to elicit responses from the LLM. The edge-node prediction service 116 makes predictions or inferences on the LLM for products and relationships between products in the product knowledge graph 120.

The product knowledge graph 120 includes a plurality of products (e.g., product 122C_1 and product 122C_2). The products are connected to other product via edges (e.g., edge 124C_1 and edge 124_C2). The products can be unique products identified using the LLM 114C and the edges are based on prompt-defined relationships (e.g., similar style, affordable alternative, and compatibility). The products are nodes that are associated with node attributes (e.g., product ID, category, product title, and audience) and the relationships are edges associated with edge attributes (e.g., relationship and relationship type).

A plurality of mapping rules are provided to map the products to products in a product listing database. In particular, the product listing database can be a set of products that have a product identifier (e.g., NIKE AIR FORCE 1 '07). Each instance of the product is associated with the product identifier, but each instance can be associated with additional features (e.g., seller, cost, color, etc.). If the product in the product knowledge graph is the same as the product in the product listing database, then the products are exact matched via product identifier. However, if the product (e.g., NIKE COURT VINTAGE TRAINERS) in the product knowledge has no exact match in the product listing database, the product can be partially matched via product identifier, where the NIKE COURT VINTAGE TRAINERS are matched to the NIKE AIR FORCE 1 '07 the closest related product in the product listing database. Matching the products in this manner can support leveraging the product insights from the product knowledge graph.

The product knowledge graph 120C or a mapped product knowledge graph can be integrated into other systems and components in the product listing system. For example, a product-to-product API 140C can generated such that product listing system services (e.g., a product recommendation application, a product look-up application, and a seller feedback service) can integrate the mapped product knowledge graph into their systems and provide corresponding using the product-to-product API 140C. The product knowledge graph 120C or a mapped version of the product knowledge graph can be stored in the graph database 150C that supports storing and employing the product knowledge graph 150 in the product listing system.

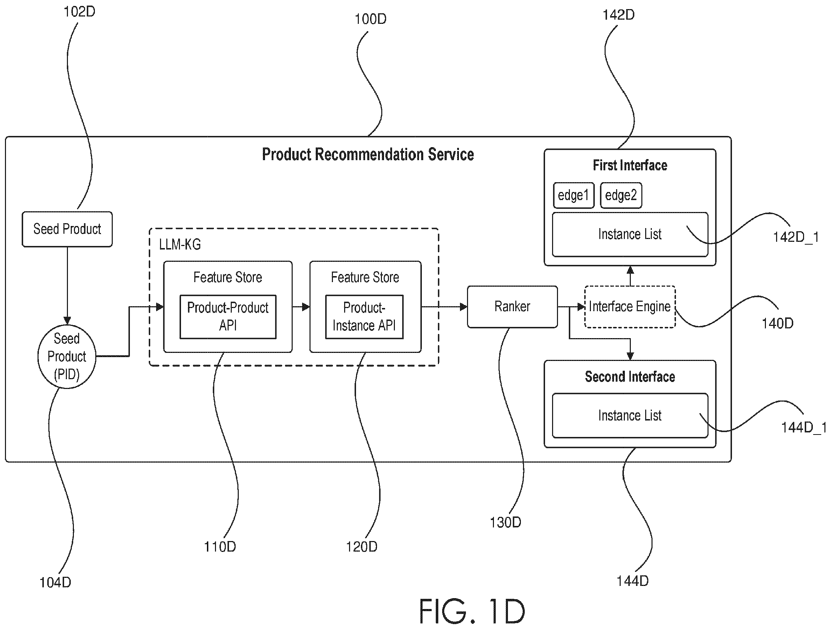

With reference to FIG. 1D, FIG. 1D illustrates a schematic associated with providing employing a generative AI KG engine in accordance with embodiments described herein. FIG. 1D illustrates seed product 102D, seed product ID 104, product-product API 110D, product-instance API 120D, ranker 130D, interface engine 1442D, first interface 142D, and second interface 144D. By way of illustration, a seed product 102D can be received at product recommendation service 100D. The seed product 102D is processed to identify a seed product ID 104D for the seed product. The seed product ID 104D is an identifier to the seed product in the product knowledge graph. The product recommendation service 100D can access one or more feature stores associated with the product knowledge graph. For example, the product-product API 110D can support mapping the seed product ID 104D to a product in the product listing system database. As discussed, the seed product ID 104D from the product knowledge graph may map to a product ID in the product listing system database where the product is an exact match or to a product ID where the product is not an exact match. The product-instance API can support mapping the seed product ID 104D to one or more instances of the products (e.g., a plurality of recommended products) that are associated with the product ID of the product in the product listing system database.

The plurality of recommended products can be processed using ranker 130D can implements ranking functionality to rank the plurality of recommended products. The plurality of recommended products is communicated to an interface engine 140D that support communicating the plurality of recommended products for presentation on different types of interfaces. The interface engine 140 can specifically operate to access additional insights from the LLL to provide in addition to the plurality of recommended products. The first interface 142D can include an instance list 142D_1 (i.e., the plurality of recommended products) that are instances of products that correspond to the seed product. The first interface 142 further include edge1 and edge2 that include edge-related information (e.g., product insights) from the product knowledge graph. The second interface can include an instance list 144D_1 (i.e., the plurality of recommended products) that are instances of products that correspond to the seed product. Other variations and combinations of interfaces associated with providing recommend products and additional insights from an LLM are contemplated with embodiments described herein.

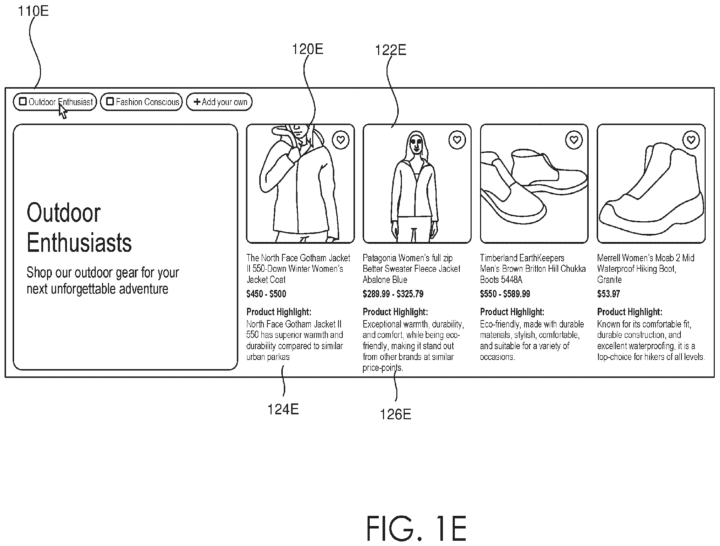

With reference to FIG. 1E, FIG. 1E illustrates a schematic associated with providing product knowledge graph-supported interfaces using a generative AI KG engine in an item listing system. The interface can be a product recommendation interface 110E for a buyer, where the product recommendations are generated using the product knowledge graph and functionality described herein. The product recommendation interface 110E can include products 120E, product 122E, with corresponding product highlight information 124E and product highlight information 126E. The product highlight information can be generated via a generative AI model based on the edge information associated with each product.

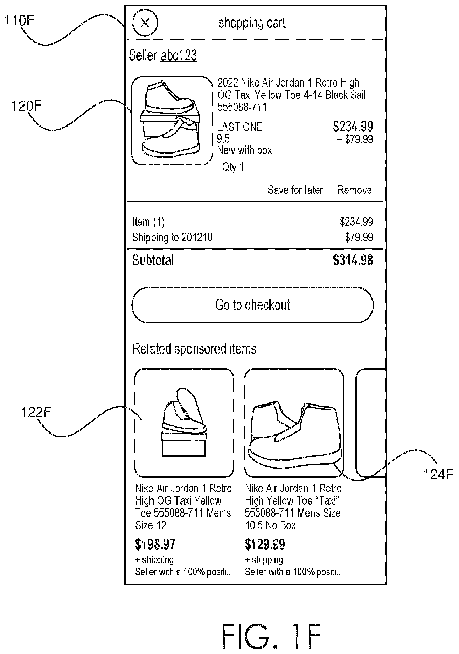

With reference to FIG. 1F, FIG. 1F illustrates a schematic associated with providing product knowledge graph-supported interfaces using a generative AI KG engine in an item listing system. The interface can be a product recommendation interface 110F for a buyer, where the product recommendations are generated using the product knowledge graph and functionality described herein. The product recommendation interface 110F can specifically be associated with a shopping cart, wherein the recommended products (i.e., recommended product 122F and recommended product 124F) are generated based on a shopping cart product 120F. The shopping cart product 120F can be a seed product that is processed using the product knowledge graph to generate recommended product 122F and recommended product 124F. Other variations and combinations of product knowledge graph-supported interfaces and recommended products are contemplated with embodiments of the present disclosure.

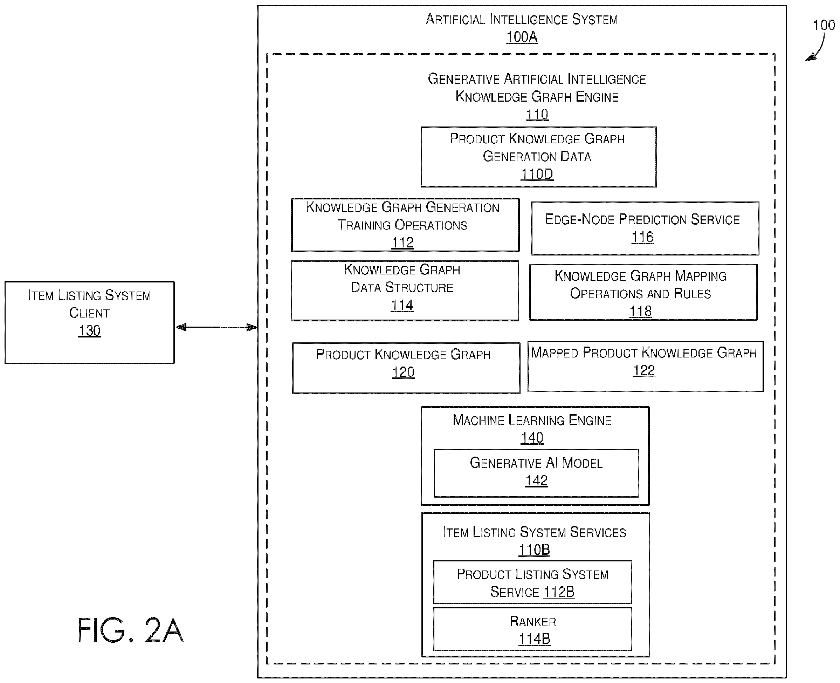

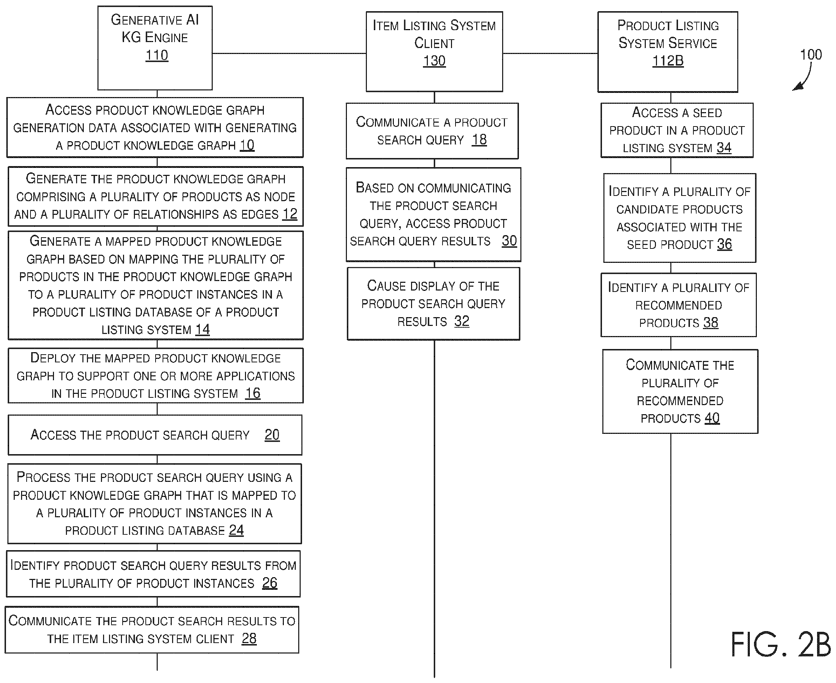

Aspects of the technical solution can be described by way of examples and with reference to FIGS. 2A and 2B. FIG. 2A is a block diagram of an exemplary technical solution environment, based on example environments described with reference to FIGS. 6A, 6B, 7 and 8 for use in implementing embodiments of the technical solution are shown. Generally the technical solution environment includes a technical solution system suitable for providing the example item listing system 100 in which methods of the present disclosure may be employed. In particular, FIG 2A shows a high level architecture of the item listing system 100 in accordance with implementations of the present disclosure. Among other engines, managers, generators, selectors, or components not shown (collectively referred to herein as "components"), the item list platform system 100 of FIG. 2A corresponds to FIGS. 1A and 1B.

With reference to FIG. 2A, FIG. 2A illustrates item listing system 100, artificial intelligence system 100A, generative AI KG engine 110, product knowledge graph generation data 110D, knowledge graph engine operations 112, knowledge graph data structure 114, edge-node prediction service 116, knowledge graph mapping operations and rules 118, product knowledge graph 120, mapped product knowledge graph 122, item listing system client 130, machine learning engine 140 including generative AI model 142, item listing system services 110B including product listing system service 112B and knowledge graph integration API 110C.

The generative AI KG engine 110 is responsible for generating and deploying a product knowledge graph (e.g., product knowledge graph 120 or mapped product knowledge graph 122). The generative AI KG engine 100 accesses product knowledge graph generation data 110D associated with generating a product knowledge graph for a product listing system (i.e., item listing system 100). The product knowledge generation data 110D comprises a plurality of seed prompt inputs that support generating the knowledge graph. Using a generative artificial intelligence (AI) knowledge graph service (i.e., edge-node prediction service 116), the generative AI KG engine 110 generates the product knowledge graph comprising a plurality of products as nodes and a plurality of relationships as edges. The generative AI knowledge graph service - edge-node prediction service 116 - associated with a generative AI model.

The product knowledge graph 120 can be a mapped product knowledge graph 122, the product knowledge graph 120 is mapped to a plurality of product instances in a product listing database based on product identifiers associated with nodes in the product knowledge graph and product identifiers associated with the plurality of product instances in a product listing database. In an example product knowledge graph 120, a first product and a second product in the product knowledge graph are mapped to a first product instance in the product listing database, where the first product is identical to the first product instance, and where the second product is not identical to the first product instance.

The product knowledge graph 120 includes a plurality of products as nodes and a plurality of relationships as edges. The product knowledge graph 120 is associated with a generative AI knowledge graph service that is an edge-node prediction service associated with a generative AI model. A node in the product knowledge graph includes a plurality of node attributes and an edge in the product knowledge graph comprises a plurality of edge attributes, where the plurality of node attributes comprise a generative AI graph context that includes in insights on a first node connected to a second node. In addition, a node in the product knowledge graph 120 includes a plurality of node attributes including an audience attribute, the audience attribute identifies one or more targeted demographics for a corresponding product associated with the node.

The generative AI KG engine 110 generates the mapped product knowledge graph 122 based on mapping the plurality of products in the product knowledge graph 120 to a plurality of product instances in a product listing database of product listing system 100. The generative AI KG engine 110 generates the mapped product knowledge graph 122 based on a plurality of mapping rules that support mapping a plurality of products of the knowledge graph to the plurality of product instances. A first mapping rule supports matching a first product in the product knowledge graph to a first product instance on the product listing database, the first product is not identical to the first product instance.

The generative AI KG engine 110 deploys the product knowledge graph 120 or the mapped product knowledge graph 122 to support one or more services (e.g., item listing system services 110B) in the product listing system 100. The product knowledge graph 120 or the mapped product knowledge graph 122 are integrated via an Application Programming Interface with one or more of the following: a product recommendation application, a product look-up application, and a seller feedback service.

The product knowledge generation data 110D is based on a prompt template associated with the plurality of seed prompt inputs, where prompt template comprises the following: a seed product element, a requested number of products element, an audience demographic element, a node element, an edge element, and a recommendations element. The plurality of seed prompt inputs are associated with a plurality of node attributes and a plurality of edge attributes, the plurality of seed prompt inputs are executable in batch mode to support generating the product knowledge graph.

A product listing system service (e.g., product listing system service 112B) in a product listing system accesses a seed product. The product listing system service uses a product knowledge graph to identify a plurality of candidate products associated with the seed product. The plurality of candidate products are individual instances of the products associated with corresponding product identifiers. An instance of a product has a plurality of product features of the instance of the product. Using a ranker (e.g., ranker 114B) of the product listing system, the product listing system service identifies a plurality of recommended products. The plurality of recommended products are a subset of the plurality of candidate products. The product listing system service communicates the plurality of recommended items to cause generation of the plurality of recommended items on a graphical user interface.

The product listing system service can identify the plurality of candidate products based on accessing a first product identifier associated with the seed product item and using the first product identifier to query the product knowledge graph. The product listing system service then identifies a plurality of connected product identifiers in the product knowledge graph associated with the first product identifier, where the plurality of connected product identifiers are nodes connected to a node of the first product identifier in the product knowledge graph. For the first product identifier and each of the plurality of connected product identifiers, the product listing system service identifies corresponding candidate products from a product listing database. The product listing system service then identifies the plurality of candidate products based on the corresponding candidate products from the product listing database.

A product listing system service accesses a product search query. Using a generative artificial intelligence (AI) knowledge graph service, the product listing system service processes the product search query using a product knowledge graph comprising a plurality of products as nodes and a plurality of relationships as edges, where the product knowledge graph is a mapped product knowledge graph, the product knowledge graph is mapped to a plurality of product instances in a product listing database. Based on processing product search query, the product listing system service identifies product search query results from the plurality of product instances; and causing display of the product search query results on a graphical user interface.

In one embodiment, the product search query can be with a seller of a product in the product search query, where processing the product search query is based an audience attribute associated with seller of the product and an audience attribute associated with the plurality of products via their corresponding nodes in the product knowledge graph.

Processing the product search query comprises: identifying a first product identifier for the product search query; using the first product identifier, querying the product knowledge graph; and identifying a plurality of connected product identifiers associated with the first product identifier in the product knowledge graph, wherein the plurality of connected product identifiers are nodes connected to a node of the first product identifier in the product knowledge graph.

For the first product identifier and each of the plurality of connected product identifiers, the product listing system service identifies corresponding candidate products from the product listing database; and identifies the product search query results based on the corresponding candidate products from the product listing database.

A product listing system client (e.g., item listing system client 130) communicates a product search query. Based on communicating the product search query, receives product search query results, wherein the product search query results are generated using the generative AI knowledge graph service that processed the product search query using the product knowledge graph. The product knowledge graph 120 can be a mapped product knowledge graph (e.g., mapped product knowledge graph 122). The product knowledge graph is mapped to a plurality of product instances in a product listing database. The product listing system client causes display of the product search query results on a graphical user interface.

With reference to FIG. 2B, FIG. 2B illustrates generative AI KG engine 110, item listing system client, and item listing system service 140 for providing product knowledge graph functionality. At block 10, the generative AI KG engine 110 accesses product knowledge graph generation data associated with generating a product knowledge graph; at block 12, generates the product knowledge graph comprising a plurality of products as nodes and a plurality of relationships as edges; at block 14, generates a mapped product knowledge graph based on mapping the plurality of products in the product knowledge graph to a plurality of product instances in a product listing database of a product listing system; and at block 16, deploys the mapped product knowledge graph to support one or more applications in the product listing system.

At block 18, the item listing system client 130 communicates a product search query. At block 20, the generative AI KG engine accesses the product search query; at block 24, processes the product search query using a product knowledge graph that is mapped to a plurality of product instances in a product listing database; at block 26, identifies product search query results from the plurality of product instances; and at block 28, communicates the product search results to the item listing system client. At block 43, the item listing system service accesses a seed product in a product listing system; at block 36, identifies a plurality of candidate products associated with the seed product; at block 38, identifies a plurality of recommended products; and at block 40, communicates the plurality of recommended products.

### Example Methods

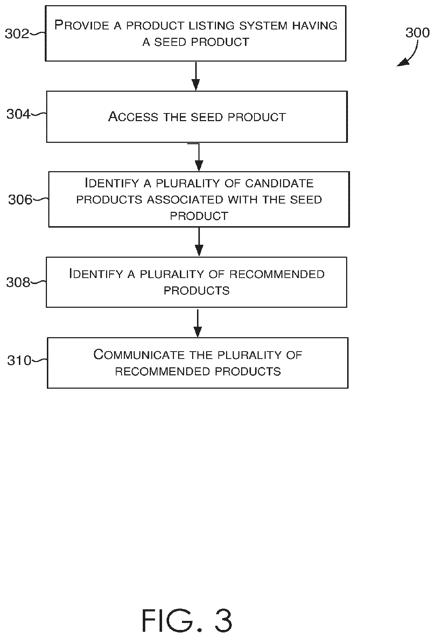

With reference to FIGS. 3, 4, and 5 flow diagrams that illustrate methods providing product knowledge graph functionality in an item listing system. The methods may be performed using the item listing platform system described herein. In embodiments, one or more computer-storage media having computer-executable or computer-useable instructions embodied thereon that, when executed, by one or more processors can cause the one or more processors to perform the methods (e.g., computer implemented method) in an item listing platform system (e.g., computerized system or computer system).

Turning to FIG. 3, a flow diagram is provided that illustrates a method 300 providing product knowledge graph functionality in an item listing system. At block 302, a product listing system having a seed product is provided. At block 304, a generative AI KG engine accesses the seed product. At block 306, the generative AI KG engine uses a product knowledge graph to identify a plurality of candidate products associated with the seed product. The product knowledge graph comprises a plurality of products as nodes and a plurality of relationships as edges. At block 308, the generative AI KG engine uses a ranker of the product listing system to identify a plurality of recommended products, where the plurality of recommended products are a subset of the plurality of candidate products. At block 310, the generative AI KG engine communicates the plurality of recommended products.

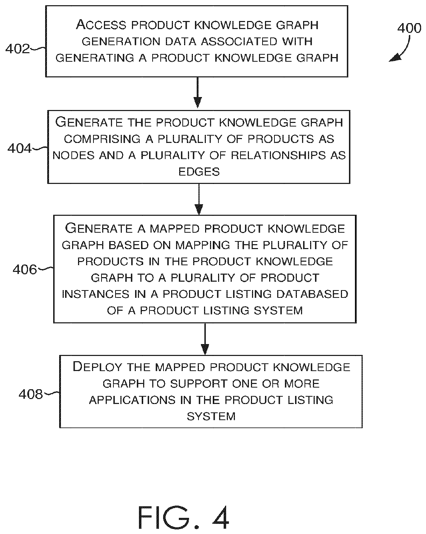

Turning to FIG. 4, a flow diagram is provided that illustrates a method 400 providing product knowledge graph functionality in an item listing system. At block 402, a generative AI KG engine accesses product knowledge graph generation data associated with generating a product knowledge graph. The product knowledge generation data comprises a plurality of seed inputs that support generating the product knowledge graph. At block 404, the generative AI KG engine uses a generative AI knowledge graph service to generate the product knowledge graph comprising a plurality of products as nodes and a plurality of relationships as edges. The generative AI knowledge graph service is an edge-node prediction service associated with a generative AI model. At block 406, the generative AI KG engine generates a mapped product knowledge graph based on mapping the plurality of products in the product knowledge graph to a plurality of product instances in a product database of a product listing system. At block 408, the generative AI KG engine deploys the mapped product knowledge graph to support one or more services in the product listing system.

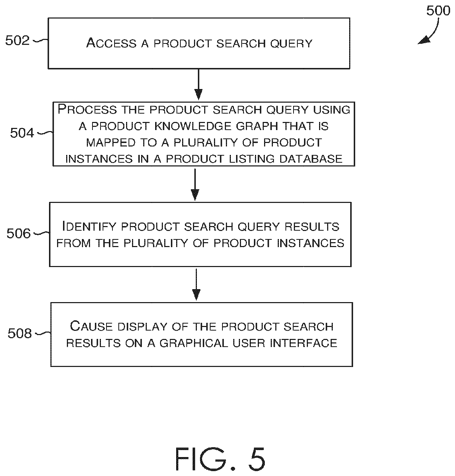

Turning to FIG. 5, a flow diagram is provided that illustrates a method 500 providing product knowledge graph functionality in an item listing system. At block 502, a generative AI KG engine accesses a product search query. At block 504, the generative AI KG engine processes the product search query using a product knowledge graph that is mapped to a plurality of product instances in a product listing database. At block 506, the generative AI KG engine identifies product search query results from the plurality of product instances. At block 508, the generative AI KG engine causes display of the product search results on a graphical user interface.

### Technical Improvement

Embodiments of the present invention have been described with reference to several inventive features (e.g., operations, systems, engines, and components) associated with an item listing platform system. Inventive features described include: operations, interfaces, data structures, and arrangements of computing resources associated with providing the functionality described herein relative with reference to an artificial intelligence system.

Embodiments of the present invention relate to the field of computing, and more particularly to item listing systems. The following described exemplary embodiments provide a system, method, and program to, among other things, execute knowledge graph engine operations that provide functionality associated with generating, deploying, and employing a generative-AI-based product knowledge graph. Therefore, the present embodiments improve the technical field of item listing system technology by providing more efficient operations and interfaces. For example, operations and interfaces described for this technical solution provide a specific improvement over prior systems, resulting in an improved functionality for an item listing system. In particular, the product knowledge graph that is generated using a generative AI model is different from conventional product knowledge graphs. The technical solution addresses conventional item listing systems' lack of integration of an artificial intelligence system and a generative AI knowledge graph engine to improve the item listing system technology by providing improved operations for item listing system services based on employing the product knowledge graph for providing the item listing system services.

Functionality of the embodiments of the present invention have further been described, by way of an implementation and anecdotal examples - to demonstrate that the operations for providing product knowledge graph functionality in an item listing system are a solution to a specific problem in item listing system technology to improve computing operations and interface in item listing systems.

### ADDITIONAL SUPPORT FOR DETAILED DESCRIPTION OF THE INVENTION

### Example Item Listing System Environment

Referring now to FIG. 6, FIG. 6 illustrates an example item listing system 600 computing environment in which implementations of the present disclosure may be employed. In particular, FIG. 6 shows a high level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 630) to perform computing operations.

The item listing platform 610 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the item listing system's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 120 supports the process of building, training, and fine-tuning machine learning models. Machine learning training data 120 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including: content generation, product image generation, personalized product recommendations, natural language chatbots, and content summarization. Traditional AI models encompass a wide range of algorithms and techniques and can be employed in various ways including: recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

### Example Distributed Computing System Environment

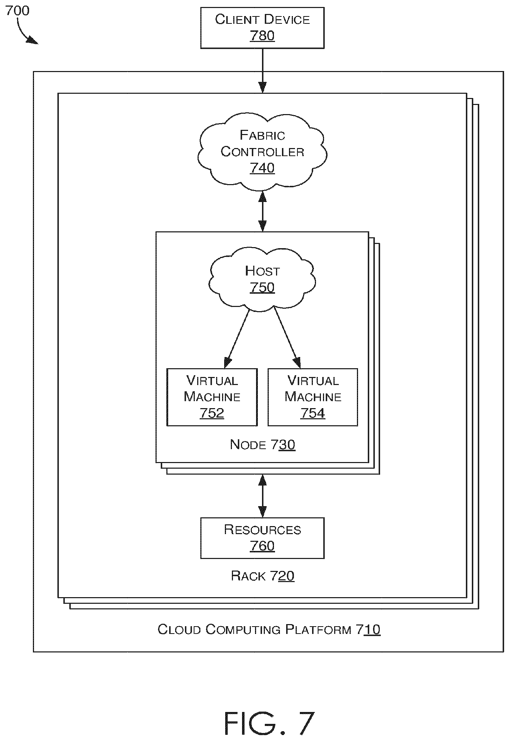

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### Example Computing Environment

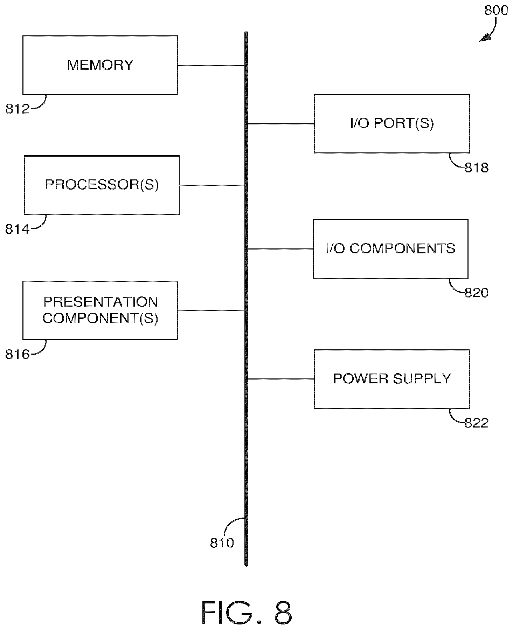

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
providing a product listing system having a seed product;
accessing the seed product;
identifying a plurality of candidate products associated with the seed product using a product knowledge graph,
wherein the product knowledge graph is associated with a generative AI knowledge graph service;
identifying a plurality of recommended products, wherein the plurality of recommended products are a subset of the plurality of candidate products; and
communicating the plurality of recommended products to cause generation of the plurality of recommended products on a graphical user interface.

2. The system of claim 1, wherein the plurality of candidate products are identified based on:
accessing a first product identifier associated with the seed product item;
using the first product identifier, querying the product knowledge graph;
identifying a plurality of connected product identifiers in the product knowledge graph associated with the first product identifier, wherein the plurality of connected product identifiers are nodes connected to a node of the first product identifier in the product knowledge graph;
for the first product identifier and each of the plurality of connected product identifiers, identifying corresponding candidate products from a product listing database; and
identifying the plurality of candidate products based on the corresponding candidate products from the product listing database;
wherein, optionally, the plurality of candidate products are individual instances of the products associated with corresponding product identifiers, an instance of a product having a plurality of product features of the instance of the product.

3. The system of claim 1 or 2, wherein the product knowledge graph comprises a plurality of products as nodes and a plurality of relationships as edges, wherein a node in the product knowledge graph comprises a plurality of node attributes and an edge in the product knowledge graph comprises a plurality of edge attributes, wherein the plurality of node attributes comprise a generative AI graph context that includes in insights on a first node connected to a second node, the plurality of node attributes including an audience attribute, the audience attribute identifies one or more targeted demographics for a corresponding product associated with the node.

4. The system of any one of claims 1 to 3, wherein the generative AI knowledge graph service is an edge-node prediction service associated with a generative AI model, and wherein identifying the plurality of candidate products associated with the seed product is performed with a ranker of the product listing system.

5. The system of any one of claims 1 to 4, wherein the product knowledge graph is a mapped product knowledge graph, the product knowledge graph is mapped to a plurality of product instances in a product listing database based on product identifiers associated with nodes in the product knowledge graph and product identifiers associated with the plurality of product instances in a product listing database;
wherein, optionally, a first product and a second product in the product knowledge graph are mapped to a first product instance in the product listing database, wherein the first product is identical to the first product instance, and wherein the second product is not identical to the first product instance.

6. The system of any one of claims 1 to 5, the operations further comprising:
accessing product knowledge graph generation data associated with generating the product knowledge graph for the product listing system, wherein the product knowledge generation data comprises a plurality of seed prompt inputs that support generating the product knowledge graph;
using the generative artificial intelligence (AI) knowledge graph service, generating the product knowledge graph comprising a plurality of products as nodes; and
deploying the product knowledge graph to support one or more application in the product listing system.

7. The system of any one of claims 1 to 6, the operations further comprising:
accessing a product search query;
using the generative AI knowledge graph service, processing the product search query using the product knowledge graph, wherein the product knowledge graph is a mapped product knowledge graph, the product knowledge graph is mapped to a plurality of product instances in a product listing database;
based on processing product search query, identifying product search query results from the plurality of product instances; and
causing display of the product search query results on a graphical user interface.

8. The system of any one of claims 1 to 7, the operations further comprising:
communicating a product search query;
based on communicating the product search query, receiving product search query results, wherein the product search query results are generated using the generative AI knowledge graph service that processed the product search query using the product knowledge graph, wherein the product knowledge graph is a mapped product knowledge graph, the product knowledge graph is mapped to a plurality of product instances in a product listing database; and
causing display of the product search query results on a graphical user interface.

9. One or more computer-storage media having computer-executable instructions embodied thereon that, when executed by a computing system having a processor and memory, cause the processor to perform operations, the operations comprising:
accessing product knowledge graph generation data associated with generating a product knowledge graph for a product listing system, wherein the product knowledge generation data comprises a plurality of seed prompt inputs that support generating the product knowledge graph;
using a generative artificial intelligence (AI) knowledge graph service, generating the product knowledge graph comprising a plurality of products as nodes and a plurality of relationships as edges;
generating a mapped product knowledge graph based on mapping the plurality of products in the product knowledge graph to a plurality of product instances in a product listing database of a product listing system; and
deploying the mapped product knowledge graph to support one or more services in the product listing system.

10. The media of claim 9, wherein the product knowledge generation data is based on a prompt template associated with the plurality of seed prompt inputs, wherein prompt template comprises the following: a seed product element, a requested number of products element, an audience demographic element, a node element, an edge element, and a recommendations element.

11. The media of claim 9 or 10, wherein the plurality of seed prompt inputs are associated with a plurality of node attributes and a plurality of edge attributes, the plurality of seed prompt inputs are executable in batch mode to support generating the product knowledge graph.

12. The media of any one of claims 9 to 11, wherein generating the mapped product knowledge graph is based on a plurality of mapping rules that support mapping a plurality of products of the knowledge graph to the plurality of product instances, wherein a first mapping rule supports matching a first product in the product knowledge graph to a first product instance on the product listing database, the first product is not identical to the first product instance;
and/or
wherein the mapped product knowledge graph is integrated via an Application Programming Interface with each of the following: a product recommendation application, a product look-up application, and a seller feedback service.

13. A computer-implemented method, the method comprising:
accessing a product search query;
using a generative artificial intelligence (AI) knowledge graph service, processing the product search query using a product knowledge graph comprising a plurality of products as nodes and a plurality of relationships as edges, wherein the product knowledge graph is a mapped product knowledge graph, the product knowledge graph is mapped to a plurality of product instances in a product listing database;
based on processing product search query, identifying product search query results from the plurality of product instances; and
causing display of the product search query results on a graphical user interface.

14. The method of claim 13, wherein processing the product search query comprises:
identifying a first product identifier for the product search query;
using the first product identifier, querying the product knowledge graph; and
identifying a plurality of connected product identifiers associated with the first product identifier in the product knowledge graph, wherein the plurality of connected product identifiers are nodes connected to a node of the first product identifier in the product knowledge graph;
the operations, optionally, further comprising:
for the first product identifier and each of the plurality of connected product identifiers, identifying corresponding candidate products from the product listing database; and
identifying the product search query results based on the corresponding candidate products from the product listing database.

15. The method of claim 13 or 14, wherein the product knowledge graph is mapped to the plurality of product instances in the product listing database based on product identifiers associated with nodes in the product knowledge graph and product identifiers associated with the plurality of product instances in the product listing database;
wherein, optionally, the product search query is associated with a seller of a product that corresponds to the product search query, wherein processing the product search query is based an audience attribute associated with the seller of the product and an audience attribute associated with the plurality of products via their corresponding nodes in the product knowledge graph.
